(19) Europäisches Patentamt
European Patent Office
Office européen des brevets

(11) EP 2 668 242 B1

(12) # EUROPEAN PATENT SPECIFICATION

(45) Date of publication and mention of the grant of the patent:
**14.11.2018 Bulletin 2018/46**

(21) Application number: **12704447.7**

(22) Date of filing: **30.01.2012**

(51) Int Cl.:
***C09J 7/38*** *(2018.01)*
***C09J 7/40*** *(2018.01)*
***C09D 183/12*** *(2006.01)*
***C08G 18/61*** *(2006.01)*
***C08G 18/79*** *(2006.01)*
***C09D 175/04*** *(2006.01)*
***C08J 7/04*** *(2006.01)*

(86) International application number:
**PCT/JP2012/052574**

(87) International publication number:
**WO 2012/102413 (02.08.2012 Gazette 2012/31)**

(54) **LAMINATE AND METHOD OF PREVENTING OR REDUCING ELECTRIFICATION OF THE SAME**

LAMINAT UND VERFAHREN ZUR VERHINDERUNG ODER REDUZIERUNG VON DESSEN ELEKTRIFIZIERUNG

STRATIFIÉ ET PROCÉDÉ PERMETTANT D'ÉVITER OU DE RÉDUIRE L'ÉLECTRISATION DU STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2011 JP 2011017036**

(43) Date of publication of application:
**04.12.2013 Bulletin 2013/49**

(73) Proprietor: **Dow Corning Toray Co., Ltd.**
**Tokyo 100-0004 (JP)**

(72) Inventors:
- **TANAKA, Hidefumi**
**Ichihara-shi, Chiba 299-0108 (JP)**
- **TANI, Toshikazu**
**Ichihara-shi, Chiba 299-0108 (JP)**
- **ENDO, Shuji**
**Ichihara-shi, Chiba 299-0108 (JP)**
- **YAMADA, Takateru**
**Ichihara-shi, Chiba 299-0108 (JP)**

(74) Representative: **Murgitroyd & Company**
**Scotland House**
**165-169 Scotland Street**
**Glasgow G5 8PL (GB)**

(56) References cited:
**EP-A1- 2 248 865**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates to a laminate having electrification preventing or reducing properties and a method of preventing or reducing electrification of a laminate.

DESCRIPTION OF THE PRIOR ART

Films displaying releasability (peelability) from various adhesive materials are known as release films (peelable films). Such release films have a structure where, for example, a layer of a cured silicone product having releasability is formed on a surface of a substrate of plastic film or the like. These release films are manufactured by applying a releasable film-forming silicone composition to the surface of the substrate and then curing.

However, depending on the texture of the substrate, this type of releasable film-forming silicone composition may not bond or adhere to the substrate and, therefore, it is difficult to obtain a release film in which the releasable cured silicone film and the substrate are strongly bonded and integrated.

Japanese Unexamined Patent Application Publication No. H07-003215 and Japanese Unexamined Patent Application Publication No. H09-208923 propose pre-forming a primer layer on a surface of a substrate, applying a releasable film-forming silicone composition thereon, and thermal curing as a solution to the problem described above.

However, silicone has excellent electrical insulating properties and, therefore, when, for example, removing the release film, there is a problem in that the releasable cured silicone film may become electrified and attract fine dust and the like.

Moreover, Japanese Unexamined Patent Application Publication No. 2009-030028 proposes compounding a cured silicone product with an anti-static agent as a solution to the problem described above.

PRIOR ART DOCUMENTS

Patent Documents

Patent Document 1: JP07-003215A
Patent Document 2: JP09-208923A
Patent Document 3: JP2009-30028A

EP2248865 describes a curable sol/gel composition for preparing transparent antistatic and impact resistant coatings, articles exhibiting such properties and a process to prepare such articles.

SUMMARY OF THE INVENTION

However, it is difficult to integrate the substrate and the cured silicone product well and obtain a laminate having superior electrification preventing or reducing properties.

An object of the present invention is to provide a laminate comprising a substrate and a cured silicone product, wherein the substrate and the cured silicone product are integrated well and the cured silicone product provides superior electrification preventing or reducing properties to the laminate.

MEANS TO RESOLVE THE PROBLEMS

The object of the present invention is achieved by a laminate as defined in claim 1 comprising:

a substrate (L1),
a primer layer (L2) formed on the substrate (L1), and
a cured silicone layer (L3) including a lithium salt (a) and a polyether modified polysiloxane (b), which is formed on the primer layer (L2).

The substrate (L1) is preferably made from resin.

The condensation reaction curable primer composition preferably includes:

one or two or more silane compounds (A) having a reactive functional group, and
one or two or more compounds (B) selected from the group consisting of an organic aluminum compound, an organic titanate ester compound, and a platinum-based compound.

The silane compound (A) having a reactive functional group is represented by general formula (1) below:

$$R^1{}_nSi(OR^2)_{4-n} \quad (1)$$

In this formula, $R^1$ preferably independently represents a reactive functional group, 2 R preferably independently represents a monovalent hydrocarbon group, and "n" preferably is an integer from 1 to 3.
The cured silicone layer (L3) is preferably a cured product of an addition reaction curable silicone composition.
The lithium salt (a) is one or two or more selected from the group consisting of $LiBF_4$, $LiClO_4$, $LiPF_6$ $LiAsF_6$, $LiSbF_6$, $LiSO_3CF_3$, $LiN(SO_2CF_3)_2$, $LiSO_3C_4F_9$, $LiC(SO_2CF_3)_3$, and $LiB(C_6H_5)_4$
The polyether modified polysiloxane (b) is preferably a polyether modified polysiloxane having a hydroxyl group.
The polyether modified polysiloxane (b) is preferably a polyether modified polysiloxane having a terminal hydroxyl group represented by general formula (2) below:

$$Y^1O\text{-}(R^3R^4SiO)_x\text{-}(R^5XSiO)_y\text{-}(R^6R^7SiO)_z\text{-}Y^2 \quad (2)$$

In this formula, $R^3$, $R^4$, $R^5$,$R^6$, and $R^7$ each independently represent a hydrogen atom, a hydroxyl group, or a monovalent hydrocarbon group; "X" represents $-R^8-(OR^9)_a-(OR^{10})_b-OH$ (wherein $R^8$, $R^9$, and $R^{10}$ each independently represent a divalent hydrocarbon group; and "a" and "b" are integers that satisfy $a \geq 0$ and $b \geq 0$). $Y^1$ and $Y^2$ each independently represent "X", a hydrogen atom, or a monovalent hydrocarbon group. "x ", "y",and "z" are integers that satisfy $x \geq 0$, $y \geq 0$, $z \geq 0$, and $x+y+z \geq 1$. However, when y=0, at least one of Y1 and Y2 is "X".
The cured silicone layer (L3) preferably further includes an isocyanate group-containing compound (f), and more preferably includes an isocyanate group-containing compound (f) that is a hexamethylene diisocyanate isocyanurate.
The present invention also relates to a releasable or adhesive film or sheet, and a releasable or adhesive roll or roller including the laminate described above.
The present invention also relates to a method of preventing or reducing electrification of a laminate, wherein the laminate comprises the substrate (L1) and the cured silicone layer (L3). The primer layer (L2) is provided between the substrate (L1) and the cured silicone layer (L3), and the cured silicone layer (L3) includes the lithium salt (a) and the polyether modified polysiloxane (b).

## EFFECTS OF THE INVENTION

According to the present invention, a substrate and a cured silicone layer can be integrated well via a primer layer, and the cured silicone layer can provide superior electrification preventing or reducing properties to a laminate. Furthermore, the cured silicone layer in the laminate of the present invention does not negatively affect the curability thereof or impair the releasability or other beneficial surface properties thereof.
Moreover, the laminate of the present invention is substantially free of properties that cause static electricity, which attracts fine dust and dirt. Therefore, the laminate of the present invention is suitable for use in applications where electrification is not preferable.
With the method of preventing or reducing electrification of the present invention, excellent electrification preventing or reducing properties can be imparted to a laminate including a substrate and a cured silicone layer. Also, with the method of preventing or reducing electrification of the present invention, the cured silicone product and the substrate can be strongly integrated.

## DETAILED DESCRIPTION OF THE INVENTION

A laminate of the present invention as defined in claim 1 comprises at least a substrate (L1), a primer layer (L2) formed on the substrate (L1), and a cured silicone layer (L3) formed on the primer layer (L2) and including a lithium salt (a) and a polyether modified polysiloxane (b).
The material of the base material (L1) is not particularly limited, and examples thereof include iron, stainless steel, aluminum, nickel, zinc, copper, and various other metals; acrylic resins, phenolic resins, epoxy resins, polycarbonate resins, polybutylene terephthalate resins, alkali-treated fluoro resins, and various other resins; glass; ceramics; and other various inorganic materials. Of these, a substrate of any type of resin is preferable because the cured silicone product can be strongly adhered to the substrate. Hencefore, it has been difficult to strongly adhere a cured silicone

product to a substrate having low surface activity such as, for example, stainless steel, nickel, polycarbonate, polybutylene terephthalate, alkali-treated fluoro resin, and similar substrates. However, when the laminate of the present invention, even in cases when such a substrate is used, the cured silicone product and the substrate can be strongly adhered and integrated.

The form of the substrate (L1) is not particularly limited, and a substrate having a desired form can be used. Examples thereof include film-like substrates or sheet-like substrates used in the manufacture of laminates such as release films, release papers, release sheets, adhesive tape, adhesive film, packaging for adhesive products, and the like, that are provided with a silicone release layer (peeling layer). Other examples include core metal of copying machine rolls, housings of oil seals, and other substrates are metal or resin substrate. Particularly, a film-like or sheet-like substrate having a thickness in a range from 0.5 to 1,000 μm, and especially a film-like substrate of resin can be preferably used.

The primer layer (L2) formed on the substrate (L1) is preferably a layer that is formed directly on the substrate (L1) and, with the laminate of the present invention, the cured silicone layer (L3) is integrated well and bonded to the substrate (L1) via the primer layer (L2).

The primer layer (L2) is used for the purpose of affixing the cured silicone layer (L3), having an electrification preventing component (described hereinafter) to the substrate (L1). The primer layer (L2) is a cured product of a curable primer composition. The cure system of the primer composition is not particularly limited provided that the purpose described above can be achieved, and examples thereof include addition reaction cure systems, radical reaction cure systems including an organic peroxide, high energy beam cure systems, condensation reaction cure systems, and similar cure systems. Of these, condensation reaction cure systems are preferable. Particularly, when the cured silicone layer (L3) includes a cured product of an addition reaction curable silicone composition, the primer layer (L2) is preferably a cured product of a condensation reaction curable primer composition. With the present invention, the cured silicone layer (L3) and the substrate (L1) can be integrated well via the primer layer (L2) that is a cured product of the primer composition. Moreover, with the present invention, superior electrification preventing or reducing effects originating from an anti-static agent compounded in the cured silicone layer (L3) can be exhibited without impairing the curability and bonding with the cured silicone layer (L3) formed on the primer layer (L2).

The condensation reaction curable silicone-based primer composition preferably includes:

> one or two or more silane compounds (A) having a reactive functional group, and
> one or two or more compounds (B) selected from the group consisting of an organic aluminum compound, an organic titanate ester compound, and a platinum-based compound. The primer layer (L2) obtained by curing the components (A) and (B) by a condensation reaction has the lithium salt (a) and the polyether modified polysiloxane (b) (described hereinafter), has highly superior bonding with the cured silicone layer (L3) that has electrification preventing or reducing effects, and does not inhibit the curability and bonding thereof.

The silane compound (A) having a reactive functional group is a base compound of the condensation reaction curable silicone-based primer composition, and preferably is a silane compound represented by the following general formula (1):

$$R^1_nSi(OR^2)_{4-n} \qquad (1)$$

In this formula, $R^1$ independently represents a reactive functional group, $R^2$ independently represents a monovalent hydrocarbon group, and "n" is an integer from 1 to 3.

In the present invention, the reactive functional group ($R^1$) is defined as a vinylgroup, an allyl group, a butenyl group, or a similar alkenyl group; or a hydroxyl group, an epoxy group, a glycidyl group, an acyl group, a carboxyl group, an ester group, an amino group, an amide group, a (meth)acryl group, a hydroxyl group, a mercapto group, an isocyanate group, or similar reactable functional group or a monovalent organic group having said functional group. One or a plurality of functional groups may exist in the monovalent organic group. $R^1$ is preferably a monosaturated or aromatic hydrocarbon group having at least one of the functional groups described above. Specific examples of the reactive functional group include 3-hydroxypropyl groups, 3-(2-hydroxyethoxy)propyl groups, 3-mercaptopropyl groups, 2,3-epoxypropyl groups, 3,4-epoxybutyl groups, 4,5-epoxypentyl groups, 2-glycidoxyethyl groups, 3-glycidoxypropyl groups, 4-glycidoxybutyl groups, 2-(3,4-epoxycyclohexyl) ethyl groups, 3-(3,4-epoxycyclohexyl)propyl groups, aminopropyl groups, N-methylaminopropyl groups, N-butylaminopropyl groups, N,N-dibutylaminopropyl groups, 3-(2-aminoethoxy)propyl groups, 3-(2-aminoethylamino)propyl groups, 3-carboxypropyl groups, 10-carboxydecyl groups, 3-isocyanate propyl groups, and the like.

$R^2$ preferably is a monovalent hydrocarbon group, does not have the reactive functional group described above, and is a substituted or unsubstituted straight or branched monovalent hydrocarbon group having from 1 to 30 carbons. Examples thereof include
methyl groups, ethyl groups, propyl groups, butyl groups, pentyl groups, hexyl groups, heptyl groups, octyl groups, and

similar straight or branched alkyl groups having from 1 to 30 carbons; cyclopentyl groups, cyclohexyl groups, and similar cycloalkyl groups having from 3 to 30 carbons; phenyl groups, tolyl groups, and similar aryl groups having from 6 to 30 carbons; benzyl groups and similar aralkyl groups having from 7 to 30 carbons; and groups wherein the hydrogen atoms bonded to the carbon atoms of these groups are substituted at least partially by fluorine or a similar halogen atom (however, the total number of carbons is from 1 to 30). A straight alkyl group having from 1 to 6 carbons or phenyl group is preferable and a methyl group, ethyl group, or phenyl group is more preferable. Particularly, the group represented by ($OR^2$) is preferably an alkoxy group having from 1 to 12 carbons, and examples thereof include methoxy groups, ethoxy groups, propoxy groups, and similar alkoxy groups.

Examples of the silane compound represented by general formula (1) include alkenyl trialkoxysilanes. Examples of the alkenyl trialkoxysilanes include allyltrimethoxysilane, allyltriethoxysilane, allyltri(ethoxymethoxy)silane, butenyltrimethoxysilane, hexenyltrimethoxysilane, hexenyltriethoxysilane, and one or two or more partially hydrolyzed condensates of organoalkoxysilanes thereof. Of these, allyltrimethoxysilane is preferable.

On the other hand, examples of the silane compound represented by general formula (1) include γ-methacryloxy group-containing organoalkoxysilanes, epoxy group-containing organoalkoxysilanes, vinyl group-containing organoalkoxysilanes, vinyl group-containing acetoxysilanes, and the like. Of these, examples of the γ-methacryloxy group-containing organoalkoxysilanes include γ-methacryloxypropyltrimethoxysilane, γ-methacryloxypropyltriethoxysilane, and γ-methacryloxypropylmethyldimethoxysilane; examples of the epoxy group-containing organoalkoxysilanes include γ-glycidoxypropyltrimethoxysilane, γ-glycidoxypropyltriethoxysilane, and β-(3,4-epoxycyclohexyl)-ethyl trimethoxysilane; and examples of the vinyl group-containing organoalkoxysilanes include vinyl trimethoxysilane, vinyl triethoxysilane, and vinyl methyl dimethoxysilane. Compounding alkyltrialkoxysilanes, dialkyl dialkoxysilanes, trialkyl alkoxysilanes, and similar hydrolysable silanes in combination with the hydrolysable silane represented by general formula (1) is included in the scope of the preferred embodiment of the present invention.

The one or two or more compounds (B) selected from the group consisting of an organic aluminum compound, an organic titanate ester compound, and a platinum-based compound are components that function as a condensation reaction catalyst of the component (A) and that enhance bonding with the cured silicone layer (L3).

Examples of the organic aluminum compound include $(CH_3O)_3Al$, $(C_2H_5O)_3Al$, $(n\text{-}C_6H_7)_3Al$, and similar aluminum alcoholates; naphthenic acid, stearic acid, octylic acid, benzoic acid, and similar aluminum salts; aluminum chelates obtained by reacting an aluminum alcoholate with an acetoacetic acid ester or a dialkyl malonate; organic acid salts of aluminum oxide; aluminum acetyl acetonate; and the like. Of these, aluminum chelates are preferable, and specific examples thereof include aluminum tris(acetyl acetonate), aluminum monoacetyl acetonate bis(ethylacetoacetate), aluminum bisethylacetoacetate monoacetyl acetonate, and the like. A single aluminum chelate may be used or a combination of two or more may be used.

Examples of the organic titanate ester include organic titanic acid esters, chelate compounds of titanium, chelate compounds of a silicic acid ester of titanium, and partially hydrolyzed condensates thereof. Specific examples of such compounds include tetraisopropyl titanate, tetra-n-butyl titanate, butyl titanate dimer, tetra (2-ethylhexyl) titanate, diethoxytitanium bis (acetyl acetonate), titanium diacetylacetonate, titanium diacetylacetate, titanium octylglycote, titanium lactate, titanium lactate ethyl ester, titanium triethanolaminate, and partially hydrolyzed condensates thereof. A single aluminum chelate may be used or a combination of two or more may be used.

Examples of the platinum-based compound include chloroplatinic acid, alcohol-modified chloroplatinic acid, complexes of platinum and a diketone, platinum-olefin complexes, complexes of chloroplatinic acid and an alkenylsiloxane, and the like. Of these, for use in hydrosilylation reactions, the platinum-olefin complexes and the complexes of chloroplatinic acid and an alkenylsiloxane (e.g. divinyltetramethyl disiloxane) are preferable, and a complex compound of chloroplatinic acid and a divinyltetramethyl disiloxane is more preferable.

In the condensation reaction curable primer composition, contents of the components (A) and (B) are not particularly limited, but the content of the component (B) is preferably from 1 to 1,000 parts by weight (mass), more preferably from 5 to 500 parts by weight (mass), and even more preferably from 10 to 200 parts by weight (mass) per 100 parts by weight (mass) of the component (A).

The curable primer composition for obtaining the primer layer of the present invention can further include a solvent (C). The solvent (C) is used to adjust the viscosity of the primer composition of the present invention to a viscosity that is suitable for the work of applying the primer, and is not particularly limited provided that it can dissolve the component (A) and the component (B). Examples of the solvent (C) include toluene, xylene, and similar aromatic hydrocarbon solvents; pentane, hexane, heptane, and similar aliphatic hydrocarbon solvents; trichloroethylene, perchloroethylene, trifluoromethylbenzene, 1,3-bis(trifluoromethyl)benzene, methylpentafluorobenzene, and similar halogenated hydrocarbon solvents; ethyl acetate, methyl ethyl ketone, methyl isobutyl ketone, and similar non-silicone-based solvents; hexamethyl cyclotrisiloxane, octamethyl cyclotetrasiloxane, decamethyl cyclopentasiloxane, and similar silicone-based solvents. The content of the solvent (C) can be determined as desired, but is preferably from 10 to 99.9 wt.% (mass%) of the primer composition.

The curable primer composition of the present invention can include various additives for the purpose of enhancing the performance. Examples of the additives include an organohydrogenpolysiloxane represented by the average unit formula:

$$R^{11}{}_dH_eSiO_{[(4-d-e)/2]}$$

(in this formula, $R^{11}$ represents a monovalent hydrocarbon group; "d" is, on average $0\leq d\leq 3$; and "e" is, on average, $1\leq e\leq 3$; however, $1\leq d+e\leq 3$) having a viscosity at 25°C of from 1 to 10,000 $mm^2s^{-1}$ (1 to 10,000 centistokes); 2,5-dimethyl-2,5 di-(t-butylperoxy)hexane, di-t-butyl peroxide, benzoyl peroxide, vinyl tris(t-butylperoxy)silane, trimethyl(t-butylperoxy)silane, and similar organic peroxides;

a diorganopolysiloxane represented by the average unit formula:

$$R^{12}{}_fSiO_{[(4-f)/2]}$$

(in this formula, $R^{12}$ represents a monovalent hydrocarbon group; however at least 0.2 mol% of $R^{12}$ is comprised of alkenyl groups; and "f" is a number from 1.9 to 2.3) having a viscosity at 25°C of not less than 5,000 $mm^2s^{-1}$ (5,000 centistokes); or a silicate and silane represented by the average unit formula:

$$R^{13}{}_gSi(OZ)_{4-g}$$

(in this formula, $R^{13}$ each independently represent a monovalent hydrocarbon group having from 1 to 8 carbons; "Z" each independently represent a hydrogen atom, an alkyl group, an aryl group, an aralkyl group, or a -R"-$OR^{13}$ group (where R" is an alkylene group); and "g" represents a value from 0 to 3); powdered silica or a similar inorganic filler; a fatty acid salt of cerium, a fatty acid salt of iron, titanium oxide, carbon black, or similar heat resistance enhancers or pigments; or the like. Note that the definition of the monovalent hydrocarbon group and examples thereof are the same as those described above. Of the silanes described above, compounding alkyltrialkoxysilanes, dialkyl dialkoxysilanes, trialkyl alkoxysilanes, and similar hydrolysable silanes other than the component (A) in the curable primer composition of the present invention as necessary is included in the scope of the preferred embodiment of the present invention.

Furthermore, optionally, the lithium salt (a) (described hereinafter) and the polyether modified polysiloxane (b) can be added to the curable primer composition and to the cured silicone layer (L3). In other words, in addition to the cured silicone layer (L3), the primer layer (L2) formed on the substrate (L1) can also include the lithium salt (a) and the polyether modified polysiloxane (b). Moreover, optionally, in addition to the component (a) and the component (b), an isocyanate group-containing compound (f) (described hereinafter) can be added to the curable primer composition.

The curable primer composition can be manufactured by uniformly mixing the components described above using a mixer or similar mechanical force.

The curable primer composition, particularly the primer layer (L2) obtained by curing the condensation reaction curable (silicone-based) primer composition, can integrate various types of substrates and the cured silicone layer (L3) that includes the lithium salt (a) and the polyether modified polysiloxane (b) (described hereinafter).

The cured silicone layer (L3) is a component that characterizes the laminate of the present invention, and is a layer obtained by curing a curable silicone composition including the lithium salt (a) and the polyether modified polysiloxane (b). By forming the cured silicone layer (L3) including these components on the primer layer (L2), superior electrification preventing or reducing effects can be imparted to the cured silicone layer (L3) while maintaining integration with the substrate (L1). Moreover, the curability and releasability or other surface properties of the cured silicone layer (L3) are not impaired.

The cured silicone layer (L3) is formed by curing the curable silicone composition including the lithium salt (a) and the polyether modified polysiloxane (b) on the primer layer (L2). The cured silicone layer (L3) exerts bonding equivalent to integration with the substrate (L1) via the primer layer (L2), and exerts superior electrification preventing or reducing effects.

In the present invention, the lithium salt (a) is a salt in which a positive ion of lithium and an arbitrary negative ion are ionically bonded. The type of lithium salt is not particularly limited, and examples thereof include $LiBF_4$, $LiClO_4$, $LiPF_6$, $LiAsF_6$, $LiSbF_6$, $LiSO_3CF_3$, $LiN(SO_2CF_3)_2$, $LiSO_3C_4F_9$, $LiC(SO_2CF_3)_3$, $LiB(C_6H_5)_4$, and the like. A single type of lithium salt may be used or two or more types may be combined.

The lithium salt may take the form of a solution, being dissolved in an organic solvent or a liquid organic polymer.

The organic solvent in which the lithium salt is dissolved is preferably a polar solvent, in which lithium salts are highly soluble. Examples thereof include methanol, ethanol, n-propyl alcohol, isopropyl alcohol, n-butyl alcohol, isobutyl alcohol, tert-butyl alcohol, amyl alcohol, hexyl alcohol, and similar alcohol systems; acetone, methyl ethyl ketone, methyl isobutyl ketone, 1-butanone, cyclohexanone, and similar ketone systems; diethylether, dibutylether, tetrahydrofuran, 1,4-dioxane, and similar ether systems; diethyl carbonate, dipropyl carbonate, ethylene carbonate, propylene carbonate, and similar carbonate systems; and the like. Preferable ester systems include ethyl acetate, n-propyl acetate, isobutyl

acetate, and similar acetic esters; malonic esters; succinic esters; glutaric esters; adipate esters; phthalate esters; and the like. Systems having an alkylene oxide group and preferably an ethylene oxide group ($-CH_2CH_2O-$) as a substituent of the organic solvent are particularly preferable because polarity is comparatively high and solubility of the lithium salt is high.

On the other hand, provided that a molecular weight thereof is comparatively low and the organic polymer itself is a liquid, a liquid organic polymer may be used as-is, or a solution in which a liquid or solid organic polymer is dissolved in a monomer or organic solvent constituting the organic polymer may be used as the liquid organic polymer in which the lithium salt is dissolved.

Examples of the organic polymer described above are not particularly limited provided that they are products of polymerizing, condensing, or condensation polymerizing a monomer, and examples thereof include polyesters, polyethers, polyurethanes, polycarbonates, polyamides, polyimides, poly(meth)acrylates, polyphosphazenes, polyvinylalcohols, and similar organic polymers.

Examples of the organic solvent for dissolving the organic polymer include toluene, xylene, and similar aromatic hydrocarbon system solvents; n-hexane, ligroin, kerosene, mineral spirits, and similar aliphatic hydrocarbon system solvents; cyclohexane, decahydronaphthalene, and similar cycloaliphatic hydrocarbon system solvents; methanol, ethanol, n-propyl alcohol, isopropyl alcohol, n-butyl alcohol, isobutyl alcohol, tert-butyl alcohol, amyl alcohol, hexyl alcohol, and similar alcohol system solvents; acetone, methyl ethyl ketone, methyl isobutyl ketone, cyclohexanone, and similar ketone system solvents; diethylether, dibutylether, tetrahydrofuran, 1,4-dioxane, and similar ether system solvents; diethyl carbonate, dipropyl carbonate, ethylene carbonate, propylene carbonate, and other carbonate system solvents; ethyl acetate, n-propyl acetate, isobutyl acetate, and other acetic esters; and malonic esters, succinic esters, glutaric esters, adipate esters, phthalate esters, and other ester system solvents.

On the other hand, when dissolving the organic polymer in a monomer constituting the organic polymer, preferably the monomer constituting the polymer being dissolved is used, and examples thereof include ethylene glycol, diethyleneglycol, 1,4-butanediol, 1,6-hexanediol, catechol, and similar alcohols; ethylenediamine, hexamethylenediamine, isophoronediamine, and similar amines; adipic acid, phthalic acid, and similar carboxylic acids; hexamethylene diisocyanate, isophoronediisocyanate, and similar isocyanates; ethylene oxide, propylene oxide, tetrahydrofuran, and similar alkylene oxides; ethylene carbonate, propylene carbonate, and similar alkylene carbonates; methyl(meth)acrylate, ethyl(meth)acrylate, butyl(meth)acrylate, 2-ethylhexyl (meth)acrylate, 2-hydroxyethyl (meth)acrylate, and similar (meth)acrylates; N-vinylpyrrolidone; γ-caprolactone; ε-caprolactam; vinyl acetate; and the like.

In order to increase the solubility of the lithium salt, the liquid organic polymer preferably contains any or all of the organic polymer, the organic solvent, and the monomer constituting the liquid organic polymer, and also has an alkylene oxide group, preferably the ethylene oxide group ($-CH_2CH_2O-$), as a substituent.

A content of the lithium salt (a) is not particularly limited, but can be in a range of 0.01 to 50 parts by weight (mass), preferably 0.05 to 30 parts by weight (mass), and more preferably 0.10 to 20 parts by weight (mass) per 100 parts by weight (mass) of the solid content of the curable silicone primer composition. If the content is less than 0.01 parts by weight (mass), the lithium ion concentration will be excessively low, leading to the possibility that the antistatic properties may be insufficient. If the content exceeds 50 parts by weight (mass), the lithium salt will absorb the moisture in the air and deliquesce, leading to the possibility that the antistatic properties may be insufficient. Unless noted otherwise, "the solid content of the curable silicone composition" refers to a total of the component (a) and components (b) to (e) (described hereinafter) that form the solid cured silicone product layer obtained via curing and any non-volatile optional ingredients. Note that a solvent that does not form solid content is not included therein.

The cured silicone layer (L3) is imparted with superior electrification preventing or reducing properties by using the polyether modified polysiloxane (b) in combination with the lithium salt (a) and, moreover, bonding with the primer layer (L2) and curability of the curable silicone composition is not negatively affected. The type of polyether modified polysiloxane (b) is not particularly limited, but a polyether modified polysiloxane having a hydroxyl group is preferable and a polyether modified polysiloxane having a terminal hydroxyl group is more preferable.

The polyether modified polysiloxane (b) is preferably a polyether modified polysiloxane having a terminal hydroxyl group represented by general formula (2) below:

$$Y^1O-(R^3R^4SiO)_x-(R^5XSiO)_y-(R^6{}_R{}^7SiO)_z-Y^2 \qquad (2)$$

In this formula, $R^3$, $R^4$, $R^5$, $R^6$, and $R^7$ each independently represent a hydrogen atom, a hydroxyl group, or a monovalent hydrocarbon group; "X" represents $-R^8-(OR^9)_a-(OR^{10})_b-OH$ (wherein $R^8$, $R^9$, and $R^{10}$ each independently represent a divalent hydrocarbon group; and "a" and "b" are integers that satisfy $a \geq 0$ and $b \geq 0$) $Y^1$ and $Y^2$ each independently represent "X", a hydrogen atom, or a monovalent hydrocarbon group. "x", "y", and "z" are integers that satisfy $x \geq 0$, $y \geq 0$, $z \geq 0$, and $x+y+z \geq 1$. However, when y=0, At least one of Y1 and Y2 is "X".

For example, "a" and "b" can each independently be an integer from 0 to 1,000, and are each preferably an integer from 0 to 100, and more preferably from 0 to 50.

For example, "x" and "z" can each independently be an integer from 1 to 100,000, and are each preferably an integer from 1 to 10,000, and more preferably from 1 to 1,000. On the other hand, "y" can be an integer from 0 to 100,000, and is preferably an integer from 0 to 10,000, and more preferably from 0 to 1,000. However, when "y" is equal to 0, At least one of Y1 and Y2 is "X".

The monovalent hydrocarbon group is preferably a substituted or unsubstituted straight or branched monovalent hydrocarbon group having from 1 to 30 carbons, and examples thereof include methyl groups, ethyl groups, propyl groups, butyl groups, pentyl groups, hexyl groups, heptyl groups, octyl groups, and similar straight or branched alkyl groups having from 1 to 30 carbons; cyclopentyl groups, cyclohexyl groups, and similar cycloalkyl groups having from 3 to 30 carbons; vinyl groups, allyl groups, butenyl groups, and similar alkenyl groups having from 2 to 30 carbons; phenyl groups, tolyl groups, and similar aryl groups having from 6 to 30 carbons; benzyl groups and similar aralkyl groups having from 7 to 30 carbons; and groups wherein the hydrogen atoms bonded to the carbon atoms of these groups are substituted at least partially by fluorine or a similar halogen atom, or an organic group having a hydroxyl group, an epoxy group, a glycidyl group, an acyl group, a carboxyl group, an ester group, an amino group, an amide group, a (meth)acryl group, a hydroxyl group, a mercapto group, an isocyanate group, or the like (however, the total number of carbons is from 1 to 30). A straight alkyl group having from 1 to 6 carbons or phenyl group is preferable and a methyl group, ethyl group, or phenyl group is more preferable.

Examples of the divalent hydrocarbon group include substituted or unsubstituted straight or branched divalent hydrocarbon groups. Specific examples thereof include methylene groups, dimethylene groups, trimethylene groups, tetramethylene groups, pentamethylene groups, hexamethylene groups, heptamethylene groups, octamethylene groups, and similar straight or branched alkylene groups; vinylene groups, arylene groups, butenylene groups, hexenylene groups, octenylene groups, and similar alkenylene groups; phenylene groups, diphenylene groups, and similar arylene groups; dimethylenephenylene groups and similar alkylene-arylene groups; and groups wherein the hydrogen atoms bonded to the carbon atoms of these groups are substituted at least partially by fluorine or a similar halogen atom, or an organic group having a hydroxyl group, an epoxy group, a glycidyl group, an acyl group, a carboxyl group, an ester group, an amino group, an amide group, a (meth)acryl group, a hydroxyl group, a mercapto group, an isocyanate group, or the like.

The number of carbons of the divalent hydrocarbon group is not particularly limited, but is preferably from 1 to 30, more preferably from 1 to 20, and even more preferably from 1 to 10. $R^8$ and $R^9$ are preferably straight or branched alkylene groups, and more preferably are ethylene groups, propylene groups, or butylene groups. $R^9$ and $R^{10}$ are preferably different types of divalent hydrocarbon groups.

A content of the polyether modified polysiloxane (b) is not particularly limited, but can be in a range of 0.01 to 50 parts by weight (mass), preferably 0.05 to 30 parts by weight (mass), and more preferably 0.10 to 20 parts by weight (mass) per 100 parts by weight (mass) of the solid content of the curable silicone composition. If the content is less than 0.01 parts by weight (mass) or exceeds 50 parts by weight (mass), antistatic properties may be insufficient.

The cure system used as the curable silicone composition is not particularly limited, and examples thereof include addition reaction cure systems, radical reaction cure systems including an organic peroxide, high energy beam cure systems, condensation reaction cure systems, and similar silicone compositions. Particularly, a radical reaction curable silicone composition including diorganopolysiloxane raw rubber and an organic peroxide, or an addition reaction curable silicone composition including an alkenyl group-containing diorganopolysiloxane, an organohydrogenpolysiloxane, and a platinum-based catalyst is preferable. Moreover, the releasable (peelable) silicone cured layer formed on the condensation reaction curable primer layer, that includes the lithium salt (a) and the polyether modified polysiloxane (b), is preferably a cured product of an addition reaction curable silicone composition that is cured using a platinum-based catalyst.

The addition reaction curable silicone composition forming the cured silicone layer (L3) of the present invention comprises, for example, the following components (c) to (e) in addition to the components (a) and (b) described above:

(c) an organopolysiloxane having at least two alkenyl groups bonded to a silicon atom in the molecule;
(d) an organohydrogenpolysiloxane having at least two hydrogen atoms bonded to a silicon atom in the molecule; and
(e) a hydrosilylation reaction platinum-based catalyst. These components correspond to the base compound, crosslinking agent, and catalyst of the addition reaction curable silicone composition, respectively.

Generally, the component (c) has a straight molecular structure, but may also have a branched structure. The silicon-bonded alkenyl groups of the component (c) are preferably alkenyl groups having from 2 to 10 carbons, and examples thereof include vinyl groups, allyl groups, butenyl groups, pentenyl groups, hexenyl groups, heptenyl groups, octenyl groups, nonenyl groups, and decenyl groups. Of these, vinyl groups are preferable, but allyl groups and hexenyl groups are also preferable. The content of the alkenyl groups in the molecule is preferably from 0.003 to 20.0 mol%, and more preferably from 0.005 to 10.0 mol% of all the organic groups bonded to the silicon atom in a molecule. An even more preferable range of the content is from 0.01 to 5.0 mol%. If the content of the alkenyl groups is less than the

lower limit described above, a curing rate sufficient for practical use may not be obtained. If the content exceeds the upper limit described above, peel force of the cured layer may increase excessively. The alkenyl groups can be bonded to a silicon atom at the end of the molecular chain, to a silicon atom in a side-chain position, or to both a silicon atom at the end of the molecular chain and a silicon atom in a side-chain position.

Examples of organic groups, other than the alkenyl groups bonded to the silicon atom, in the component (c) include methyl groups, ethyl groups, propyl groups, butyl groups, hexyl groups, heptyl groups, octyl groups, nonyl groups, decyl groups, and similar alkyl groups; phenyl groups, tolyl groups, xylyl groups, and similar aryl groups; benzyl groups, phenethyl groups, and similar aralkyl groups; 3-chloropropyl groups, perfluoroalkyl groups represented by the formula: $C_mF_{2m+1}CH_2CH_2$- (where "m" is an integer from 1 to 10; e.g. 3,3,3-trifluoropropyl groups and pentafluorobutyl groups), and similar halogenated alkyl groups; etherified perfluoroalkyl groups represented by the formulae: $F[CF(CF_3)CF_2O]_nCF(CF_3)CF_2OCH_2CH_2CH_2$-, $F[CF(CF_3)CF_2O]_nCF(CF_3)CH_2OCH_2CH_2CH_2$-, $F[CF(CF_3)CF_2O]_nCF_2CF_3CH_2CH_2$-, $F[CF(CF_3)CF_2O]_nCF(CF_3)CH_2CH_2$-, $C_mF_{2m+1}CH_2CH_2OCH_2CH_2CH_2$-, and $C_mF_{2m+1}CH_2OCH_2CH_2CH$- (where "n" is an integer from 1 to 5, and "m" is an integer from 3 to 10); and cyanoethyl groups. Of these, from the perspectives of ease of synthesis and properties of the cured layer, alkyl groups, phenyl groups, or perfluoroalkyl groups (however, having not less than 50 mol% methyl groups) are preferable. More preferably, all of the organic groups other than the alkenyl groups are methyl groups.

Specific examples of the component (c) include dimethylpolysiloxane capped at both molecular terminals with dimethylvinylsiloxy groups, dimethylsiloxane-methylvinylsiloxane copolymers capped at both molecular terminals with trimethylsiloxy groups, dimethylsiloxane-methylvinylsiloxane copolymers capped at both molecular terminals with dimethylvinylsiloxy groups, dimethylsiloxane-methylvinylsiloxane copolymers capped at both molecular terminals with dimethylethoxysiloxy groups, dimethylsiloxane-methylphenylsiloxane copolymers capped at both molecular terminals with dimethylvinylsiloxy groups, and dimethylsiloxane-methyl (3,3,3-trifluoropropyl)siloxane copolymers capped at both molecular terminals with dimethylvinylsiloxy groups.

The component (c) may be a liquid or in a raw rubber state at room temperature, but, when used in a solvent-free composition, is preferably a liquid having a viscosity of preferably from 50 to 50,000 mPa·s and more preferably from 50 to 20,000 mPa·s. When the component (A) is in a raw rubber state at room temperature, as described hereinafter, the component (A) is preferably dissolved in xylene, toluene, or a similar organic solvent.

A content of the component (c) can, for example, be from 60.0 to 99.5 wt.% (mass%), and preferably is from 70.0 to 99.0 wt.% (mass%) of the entire solid content of the composition. A component (d) is a crosslinking agent that crosslinks the component (c) via a hydrosilylation reaction, and a content thereof can, for example, be from 0.5 to 40.0 wt.% (mass%) of the entire composition. "Of the entire solid content of the composition" refers to a compounded amount shown as the contents (in wt.% (mass%)) of each of the components when an entire weight (mass), excluding the organic solvent, of a sum of the components (a) to (d) and the non-volatile optional components that form the cured product of the addition reaction curable silicone composition is set to 100 wt.% (mass%).

The component (d) is preferably an organohydrogenpolysiloxane that is an alkyl group or phenyl group having a viscosity at 25°C from 1 to 1,000 mPa·s, at least two silicon-bonded hydrogen atoms per molecule, and in which silicon-bonded organic groups have from 1 to 8 carbons. It is necessary for the component (d) to have two or more silicon-bonded hydrogen atoms in the molecule in order to crosslink the component (A) and, preferably, the component (d) has three or more silicon-bonded hydrogen atoms per molecule.

The bonding sites of the silicon-bonded hydrogen atoms in the component (d) are not particularly limited, and examples thereof include molecular terminals and/or sidechains. The content of the silicon-bonded hydrogen atoms is preferably from 0.001 to 1.7 wt.% (mass%) and more preferably from 0.005 to 1.7 wt.% (mass%).

Examples of the silicon-bonded organic groups of the component (d) include methyl groups, ethyl groups, propyl groups, butyl groups, octyl groups, and similar alkyl groups having from 1 to 8 carbons and phenyl groups, and not less than 50% of a total thereof is preferably alkyl groups having from 1 to 8 carbons. Of these alkyl groups, from the perspectives of cured layer properties and ease of manufacture, methyl groups are preferable. The component (B) may have a straight, branched, networked, or cyclic molecular structure.

A viscosity at 25°C of the component (d) is preferably from 1 to 1,000 mPa·s and more preferably from 5 to 500 mPa·s. It is not preferable that the viscosity at 25°C is less than the lower limit described above because the component (d) will be prone to volatilizing in the silicone composition. Additionally it is not preferable that the viscosity at 25°C exceed the upper limit described above because curing time of the silicone composition may lengthen and the overall viscosity of the addition reaction curable silicone composition will be high.

Specific examples of the component (d) include methylhydrogenpolysiloxanes capped at both molecular terminals with trimethylsiloxy groups, dimethylsiloxane-methyl hydrogen siloxane copolymers capped at both molecular terminals with trimethylsiloxy groups, dimethylsiloxane-methyl hydrogen siloxane copolymers capped at both molecular terminals with dimethylhydrogensiloxy groups, cyclic methylhydrogenpolysiloxane, cyclic methylhydrogensiloxane-dimethylsiloxane copolymers, tris(dimethylhydrogensiloxy)methylsilanes, and tetra(dimethylhydrogensiloxy)silanes.

A compounding ratio of the component (c) to the component (d) is preferably such that a molar ratio of the

amount of silicon-bonded hydrogen atoms in the component (d) to the amount of alkenyl groups in the component (c) is from 0.3 to 10.0. If this molar ratio is less than 0.3, the cured layer may be weak. If this molar ratio exceeds 10.0, releasability from adhesive matter may decline, and blocking may easily occur between cured layers. Additionally, change over time of peel force may increase and practical usability may be impaired. From these perspectives, amounts such that the molar ratio is from 0.7 to 5.0 are preferable.

A component (e) promotes the hydrosilylation reaction crosslinking of the component (c) and the component (d) and also promotes curing. Specific examples of the component (e) include chloroplatinic acid, an alcohol solution of chloroplatinic acid, an aldehyde solution of chloroplatinic acid, an olefin complex of chloroplatinic acid, and a complex of chloroplatinic acid and a diketone; a complex of chloroplatinic acid and a divinyltetramethyl disiloxane, a complex of chloroplatinic acid and a tetramethyltetravinylcyclotetrasiloxane, a platinum-divinyltetramethyl disiloxane complex, a platinum-tetramethyltetravinylcyclotetrasiloxane complex, and similar platinum-alkenylsiloxane complexes; compounds where platinum tetrachloride, platinum fine particles, alumina fine particles, or silica fine particles carry fine particles of platinum, platinum black, olefin complexes of platinum, diketone complexes of platinum, and carbonyl complexes of platinum.

From the perspectives of compatibility with the component (c) and the component (d), solubility in organic solvents, and curing reaction promotion capability, the component (e) is preferably chloroplatinic acid, a complex of chloroplatinic acid and a divinyltetramethyl disiloxane, a complex of chloroplatinic acid and a tetramethyltetravinylcyclotetrasiloxane, a platinum-divinyltetramethyl disiloxane complex, a platinum-tetramethyltetravinylcyclotetrasiloxane complex, or a similar platinum-alkenylsiloxane complex.

A compounded amount of the component (e) is a catalytic amount or, in other words, an amount sufficient to cure the silicone composition. From the perspectives of curability of the composition, bonding to the substrate, and cost effectiveness, the compounded amount is, in terms of the amount of platinum metal, preferably in a range from 5 to 1,000 ppm and more preferably in a range from 10 to 500 ppm per 100 parts by weight (mass) of a total of the component (c) and the component (d).

In addition to the components described above, the addition reaction curable silicone composition preferably includes a hydrosilylation reaction suppressing agent in order to suppress gelling and curing at room temperature, enhance storage stability, and impart heat curability properties to the composition. Examples of the hydrosilylation reaction suppressing agent include acetylene-based compounds, ene-yne compounds, organic nitrogen compounds, organic phosphorus compounds, and oxime compounds. Specific examples thereof include 3-methyl-1-butyne-3-ol (methylbutynol), 3,5-dimethyl-1-hexyne-3-ol, 3-methyl-1-pentene-3-ol, phenylbutynol, and similar alkynyl alcohols; 3-methyl-3-pentene-1-yne, 3,5-dimethyl-1-hexyne-3-yne, 1-ethynyl-1-cyclohexanol, benzotriazole, methylvinylcyclosiloxane, and the like. A compounded amount of the hydrosilylation reaction suppressing agent, with the total amount of the components (a) to (e) described above being 100 parts by weight (mass), is generally in a range from 0.001 to 5 parts by weight (mass), but may be selected appropriately depending on the type of each component used, performance and amount of the hydrosilylation reaction platinum-based catalyst, the amount of alkenyl groups in the component (c), and the amount of silicon-bonded hydrogen atoms in the component (d).

The curable silicone composition can, as necessary, include an organic solvent. Specific examples of the organic solvent include toluene, xylene, and similar aromatic hydrocarbons; pentane, hexane, heptane, and similar aliphatic hydrocarbons; trichloroethylene, perchloroethylene, trifluoromethylbenzene, 1,3-bis(trifluoromethyl)benzene, methylpentafluorobenzene, and similar halogenated hydrocarbons; ethyl acetate; methyl ethyl ketone; and methyl isobutyl ketone. Of these, from the perspectives of solubility, safety, and cost performance, toluene, xylene, and n-hexane are preferable.

The curable silicone composition preferably further includes an isocyanate group-containing compound (f). The isocyanate group-containing compound (f) is not particularly limited provided that it is a compound having at least one isocyanate group in the molecule, and examples thereof include 2,4-tolylene diisocyanate, diphenylmethane-4,4'-diisocyanate, xylylene diisocyanate, isophorone diisocyanate, lysine methyl ester diisocyanate, methylcyclohexyl diisocyanate, trimethylhexamethylene diisocyanate, hexamethylene diisocyanate, methylene bis(cyclohexyl isocyanate), bis(isocyanate methyl)cyclohexane, 1,6,11-undecane triisocyanate, n-pentane-1,4-diisocyanate, trimers thereof, isocyanurates or biurets thereof, polymers thereof having two or more isocyanate groups, blocked isocyanates, and the like.

The isocyanate group-containing compound (f) is preferably an isocyanurate or biuret represented by general formula (3) or (4) below.

Formula 1

General formula (3)

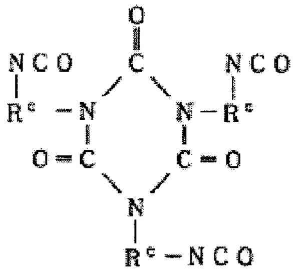

General formula (4)

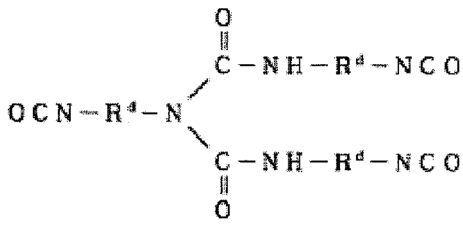

In these formulae, $R^c$ and $R^d$ each independently represent a divalent hydrocarbon group. Note that the definition of divalent hydrocarbon group and examples thereof are the same as those described above.

The isocyanate group-containing compound (f) is more preferably a hexamethylene diisocyanate isocyanurate.

A content of the isocyanate group-containing compound (f) is not particularly limited, but can be in a range of 0.003 to 20 parts by weight (mass), preferably 0.01 to 10 parts by weight (mass), and more preferably 0.03 to 5.0 parts by weight (mass) per 100 parts by weight (mass) of the solid content of the curable silicone composition.

As necessary, other optional components can be added to the curable silicone composition. For example, stabilizers, heat-resistance enhancers, fillers, pigments, leveling agents, release control agents (heavy peeling additives or light peeling additives), mist suppressants, agents for enhancing adhesion to the substrate, anti-static agents, anti-foaming agents, non-reactive organopolysiloxanes, and the like may be added. Additionally, depending on the method by which the composition is applied in the manufacturing process, a silica fine particle or similar known thickening agent can be compounded in order to obtain a desired thickness of the coating.

From the perspective of coatability on the substrate (L1), an overall viscosity of the curable silicone composition at 25°C when the composition is solvent-free is preferably in a range from 50 to 5,000 mPa·s and, when the composition includes a solvent, is preferably in a range from 0.5 to 50,000 mPa·s.

The curable silicone composition can be easily manufactured by uniformly mixing the components described above. The order in which the components are compounded is not particularly limited, but, for example, in cases where the composition is not used immediately following mixing, the component (c), the component (d), and the component (e) are preferably each stored separately and mixed in immediately prior to use.

Forming of the laminate of the present invention can be performed using any method. For example, the laminate including the cured silicone layer (L3) having the lithium salt (a) and the polyether modified polysiloxane (b) can be obtained by: forming the primer layer (L2) on the substrate (L1) by applying and curing the primer composition, and then applying and curing the curable silicone composition having the lithium salt (a) and the polyether modified polysiloxane (b) on the primer layer (L2).

When the primer layer (L2) is a primer layer (L2) obtained by curing the condensation reaction curing (silicone-based) primer composition described above, the cured silicone layer (L3) can be manufactured by: forming the primer layer (L2) by applying the primer composition to the substrate (L1) and then air-drying for not less than 30 minutes or, alternately, heat treating at a temperature from, for example, 50°C to 110°C; and, thereafter, forming the cured silicone layer (L3) by applying the curable silicone composition and heating, or the like. The method of applying is not particularly limited, and spray, brush, immersion, and similar known techniques can be used.

When the cured silicone layer (L3) is a cured product of the addition reaction curable silicone composition, the addition reaction curable silicone composition is preferably applied on the primer layer (L2) using a known technique and then heat cured, after forming the primer layer (L2) on the substrate (L1). A suitable curing temperature is generally from 50 to 200°C, but, provided that the heat resistance of the substrate (L1) is excellent, may be 200°C or higher. The method of heating is not particularly limited, and examples thereof include heating in a hot-air circulation oven, passing through a long heating furnace, and heat ray radiation by an infrared or halogen lamp. The curable silicone composition on the primer layer may also be cured using a combination of heating and UV light irradiation. Curing of the curable silicone composition is preferably carried out from 50 to 200°C and, in this case, heating time can be set to be from 1 second to 5 minutes.

With the laminate of the present invention, the substrate (L1) and the cured silicone layer (L3) are integrated strongly via the primer layer (L2), and is beneficial in that while the cured silicone layer (L3) exerts superior electrification preventing or reducing properties, curability and surface properties (e.g. adhesion) of the cured silicone layer (L3) are not inhibited. Taking advantage of these properties, the laminate of the present invention is useful in the manufacture of a product (the laminate) provided with a silicone release layer (peeling layer) such as a release film, a release paper, a release sheet, adhesive tape, adhesive film, packaging for adhesive products, and the like. In addition, the primer layer (L2) of the present invention can be effectively used as a primer layer for strongly adhering the core metal of a

copying machine roll to a cured silicone layer, adhering the housing of an oil seal to a cured silicone layer, or adhering other metal or resin substrates and cured silicone layers.

Another aspect of the present invention is a method of preventing or reducing electrification of a laminate, wherein the laminate comprises the substrate (L1) and the cured silicone layer (L3). The primer layer (L2) is provided between the substrate (L1) and the cured silicone layer (L3), and the cured silicone layer (L3) includes the lithium salt (a) and the polyether modified polysiloxane (b). Moreover, in the method described above, bonding between the substrate (L1) and the cured silicone layer (L3) is not inhibited and curability and surface properties of the cured silicone layer (L3) are not negatively affected.

INDUSTRIAL APPLICABILITY

The laminate of the present invention can be used as a releasable film or sheet (release paper, release tape, or the like) in cases where the cured silicone layer has releasability or, alternately, can be used as a member of a roll or roller (transport roll, toner anchoring rubber roll, or the like). On the other hand, in cases where the cured silicone layer has adhesive properties, the laminate of the present invention can be used as an adhesive film or sheet (adhesive tape or the like) or, alternately as a member of a roll or roller (cleaning roll or the like).

Static electricity electrification in the laminate of the present invention is reduced and, as a result, attraction of dust and dirt caused by static electricity is suppressed. Therefore, the laminate of the present invention can be suitably used in fields requiring clean environments such as the semiconductor, display, touch panel, copying machine, printer, and similar fields.

Examples

Hereinafter, examples will be used to describe the present invention in more detail, but the present invention is not limited to these examples. Note that in the descriptions given below "parts" refer to parts by weight (mass).

Practical Example 1

A primer composition I was prepared by mixing 10.0 parts of a glycidoxypropyltrimethoxysilane, 10.0 parts of a $\gamma$-methacryloxypropyltrimethoxysilane, 5.0 parts of an aluminum bis-ethylacetoacetate-mono-acetylacetonate, 750 parts of a methyl ethyl ketone, and 750 parts of toluene. The mixture was applied on a PET film having a thickness of 38 $\mu$m (38 microns) so that a coated amount after drying would be 0.08 g/m$^2$, and then dried for 10 seconds in a hot-air circulation oven preheated to 100°C. Thus, a primer-coated film I was obtained. Thereafter, a release agent composition was prepared including 100 parts of an addition reaction curable silicone release agent (SD7226, manufactured by Dow Corning Toray Co., Ltd.); 450 parts of a methyl ethyl ketone; 450 parts of toluene; 1.5 parts of an addition reaction platinum catalyst (SRX212, manufactured by Dow Corning Toray Co., Ltd.); 5.0 parts of a mixture (Denon RH-10, manufactured by Marubishi Oil Chemical Co., Ltd.) of a polyether-modified silicone capped by terminal hydroxyl groups, a lithium salt, and a methyl ethyl ketone; and 1.5 parts of a hexamethylene diisocyanate isocyanurate (Coronate HX, manufactured by Nippon Polyurethane Industry Co., Ltd.). The release agent composition was applied on a primer coated film I so that a coated amount after drying would be about 0.15 g/m$^2$, and then the coated product was dried for 30 seconds in a hot-air circulation oven preheated to 130°C. Thus, a laminate I having a silicone cured layer on a surface of a plastic film was obtained.

Comparative Example 1

Aside from excluding the Denon RH-10 and the Coronate HX from the release agent composition, a laminate II was obtained the same as the laminate of Practical Example 1.

Comparative Example 2

Aside from not applying a primer, a laminate III was obtained the same as the laminate of Practical Example 1.

Practical Example 2

Aside from using a different addition curable silicone release agent (LTC750A, manufactured by Dow Corning Toray Co., Ltd.) in place of the SD7226 as the addition curable silicone release agent, a laminate IV was obtained the same as the laminate of Practical Example 1.

Comparative Example 3

Aside from excluding the Denon RH-10 and the Coronate HX from the release agent composition, a laminate V was obtained the same as the laminate of Practical Example 2.

Comparative Example 4

Aside from not applying a primer, a laminate VI was obtained the same as the laminate of Practical Example 2.

The formulations of the primer compositions used in Practical Examples 1 and 2 and Comparative Examples 1 and 3 are shown below.

Table 1: Primer compositions of Practical Examples 1 and 2 and Comparative Examples 1 and 3 (unit: parts)

| | Practical Example 1 | Comparative Example 1 |
|---|---|---|
| | Practical Example 2 | Comparative Example 3 |
| Glycidoxypropyltrimethoxysilane | 10.0 | |
| γ-methacryloxypropyltrimethoxysilane | 10.0 | |
| Aluminum bis-ethylacetoacetate-mono-acetylacetonate | 5.0 | |
| Methyl ethyl ketone | 750 | |
| Toluene | 750 | |

The formulations of the release agent compositions used in Practical Example 1 and Comparative Examples 1 and 2 are shown below.

Table 2: Release agent compositions of Practical Example 1 and Comparative Examples 1 and 2 (unit: parts)

| | Practical Example 1 | Comparative Example 1 |
|---|---|---|
| | Comparative Example 2 | |
| SD7226 (manufactured by Dow Corning Toray Co., Ltd.) | 100 | 100 |
| Methyl ethyl ketone | 450 | 450 |
| Toluene | 450 | 450 |
| SRX212 (manufactured by Dow Corning Toray Co., Ltd.) | 1.5 | 1.5 |
| Denon RH-10 (manufactured by Marubishi Oil Chemical Co., Ltd.) | 5.0 | - |
| Coronate HX (manufactured by Nippon Polyurethane Industry Co., Ltd.) | 1.5 | - |

The formulations of the release agent compositions used in Practical Example 2 and Comparative Examples 3 and 4 are shown below.

Table 3: Release agent compositions of Practical Example 2 and Comparative Examples 3 and 4 (unit: parts)

| | Practical Example 2 | Comparative Example 3 |
|---|---|---|
| | Comparative Example 4 | |
| LTC750A (manufactured by Dow Corning Toray Co., Ltd.) | 100 | 100 |
| Methyl ethyl ketone | 450 | 450 |
| Toluene | 450 | 450 |

(continued)

| | Practical Example 2<br>Comparative Example 4 | Comparative Example 3 |
|---|---|---|
| SRX212 (manufactured by Dow Corning Toray Co., Ltd.) | 1.5 | 1.5 |
| Denon RH-10 (manufactured by Marubishi Oil Chemical Co., Ltd.) | 5.0 | - |
| Coronate HX (manufactured by Nippon Polyurethane Industry Co., Ltd.) | 1.5 | - |

The adhesion, release resistance, residual adhesion ratio, surface resistance, and the half-life of charge decay of the laminates I to VI obtained in Practical Examples 1 and 2 and Comparative Examples 1 to 4 were measured and evaluated as follows. The results are shown in Table 4.

(a) Adhesion

The laminates were aged for seven days in an oven at a humidity of 90% and a temperature of 40°C. Thereafter, the coated surface was rubbed with a finger. A quality of adhesion was evaluated by an observation of whether or not the coating layer fell off by the unaided eye.

(b) Release resistance

The laminates were aged for one day in an oven at a temperature of 70°C. Thereafter, an acrylic-based solvent adhesive (Olivine BPS-5127, manufactured by Toyo Ink Manufacturing Co., Ltd.) was applied to an application surface and was dried for 120 seconds in a hot-air circulation oven preheated to 70°C. Next, a polyethylene terephthalate (PET) film having a thickness of 25 $\mu$m (25 microns) was adhered to this treated surface and was aged for one day at a temperature of 25°C under a load of 20 g/cm$^2$. Samples were fabricated by cutting this aged product at a width of 5 cm. Using a tensile tester, the adhered PET film was peeled from the samples at an angle of 180° and a peel rate of 0.3 m/minute and the force (g) needed to perform the peeling was measured.

(c) Residual adhesion ratio

Polyester adhesive tape (Nitto Polyester Tape 31B, manufactured by Nitto Denko Corporation) was adhered to the laminate and was aged for 20 hours at a temperature of 70°C and under a load of 20 g/cm$^2$. Thereafter, the adhered polyester adhesive tape was peeled off and that tape was adhered to a stainless steel plate using a 2 kg rubber roller. After aging for 30 minutes at 25°C, the adhered adhesive tape was peeled from the stainless steel plate at an angle of 180° and a peel rate of 0.3 m/minute using a tensile tester, and the adhesive strength (g) thereof was measured. This measured value was taken as "residual adhesive strength". On the other hand, an unused polyester adhesive tape was adhered to the surface of the stainless steel plate using a 2 kg rubber roller, and the adhesive strength (g) thereof was measured in the same manner as described above. This measured value was taken as "base adhesive strength". These adhesive strength values were used to calculate the residual adhesion ratio according to the following formula.

$$\text{Residual adhesion ratio (\%)} = (\text{Residual adhesive strength} \div \text{Base adhesive strength}) \times 100$$

(d) Surface resistance

Surface resistance was measured using a STACK TR-2 type surface resistance meter (manufactured by Tokyo Electronics Co., Ltd.).

(e) Measurement of half-life of charge decay

The half-life of charge decay was measured in accordance with the method described in JIS L1094 using a HONESTMETER H-110 (manufactured by Shishido Electrostatic Ltd.).

Table 4

| | Practical Examples | | Comparative Examples | | | |
|---|---|---|---|---|---|---|
| | Practical Example 1 | Practical Example 2 | Comparative Example 1 | Comparative Example 2 | Comparative Example 3 | Comparative Example 4 |
| Adhesion | Good | Good | Good | Poor | Good | Poor |
| Release resistance (g) | 18 | 7.9 | 20 | Not measurable | 7.7 | Not measurable |
| Residual adhesion ratio (%) | 96 | 95 | 94 | Not measurable | 95 | Not measurable |
| Surface resistance (Ω) | $3\times10^{10}$ | $4\times10^{10}$ | $5\times10^{11}$ or greater | $4\times10^{10}$ | $5\times10^{11}$ or greater | $2\times10^{10}$ |
| Half-life of charge decay (seconds) | 9 | 8 | 120 or longer | 1 | 120 or longer | 2 |

* With the laminates of Comparative Examples 2 and 4, the release resistance and residual adhesion ratio could not be measured because the adhesion of the silicone cured layer was poor.

It is clear from Table 4 that with Practical Examples 1 and 2 that correspond to the present invention, adhesion between the silicone cured layer and the substrate is excellent, insulating properties are superior, and that electrification on the silicone cured layer can be prevented or reduced.

On the other hand, with Comparative Examples 1 and 3, in which release agent compositions were used that lacked the lithium salt, the polyether modified polysiloxane, and the isocyanate group-containing compound, the half-life of charge decay was long, and electrification on the silicone cured layer could not be effectively reduced. Furthermore, as shown in Comparative Examples 2 and 4, it is clear that even when the lithium salt, the polyether modified polysiloxane, and the isocyanate group-containing compound are compounded in the silicone cured layer, if the primer is not used, bonding between the silicone cured layer and the substrate will significantly decline, and insulation properties, of which the surface resistance value is representative, will be negatively affected.

**Claims**

**1.** A laminate comprising: a substrate (L1),
a primer layer (L2) formed on the substrate (L1), the primer layer (L2) being obtained by curing a condensation reaction curable silicone based primer composition, and
a cured silicone layer (L3) including a lithium salt (a) and a polyether modified polysiloxane (b), which is formed on the primer layer (L2).

**2.** The laminate of claim 1, wherein the substrate (L1) is made from resin.

**3.** The laminate of any of claims 1 to 2, wherein the condensation reaction curable primer composition comprises: one or two or more silane compounds (A) having a reactive functional group, and one or two or more compounds (B) selected from the group consisting of an organic aluminum compound, an organic titanate ester compound, and a platinum-based compound.

**4.** The laminate of claim 3, wherein the silane compound (A) having a reactive functional group is represented by general formula (1) below:

$$R^1{}_nSi(OR^2)_{4-n} \qquad (1)$$

wherein $R^1$ independently represents a reactive functional group; $R^2$ independently represents a monovalent hydrocarbon group; and "n" is an integer from 1 to 3.

5. The laminate of any of claims 1 to 4, wherein the cured silicone layer (L3) is a cured product of an addition reaction curable silicone composition.

6. The laminate of any of claims 1 to 5, wherein the lithium salt (a) is one or two or more selected from the group consisting of $LiBF_4$, $LiC10_4$, $LiPF_6$, $LiAsF_6$, $LiSbF_6$, $LiSO_3CF_3$, $LiN(SO_2CF_3)_2$, $LiSO_3C_4F_9$, $LiC(SO_2CF_3)_3$, and $LiB(C_6H_5)4$.

7. The laminate of any of claims 1 to 6, wherein the polyether modified polysiloxane (b) is a polyether modified polysiloxane having a hydroxyl group.

8. The laminate of any of claims 1 to 7, wherein the polyether modified polysiloxane (b) is a polyether modified polysiloxane having a terminal hydroxyl group represented by general formula (2) below:

$$Y^1O\text{-}(R^3R^4SiO)_x\text{-}(R^5XSiO)_y\text{-}(R^6R^7SiO)_z\text{-}Y^2 \qquad (2)$$

wherein $R^3$, $R^4$, $R^5$, $R^6$, and $R^7$ each independently represent a hydrogen atom, a hydroxyl group, or a monovalent hydrocarbon group; "X" represents
$-R^8-(OR^9)_a-(OR^{10})_b-OH$ (wherein $R^8$, $R^9$, and $R^{10}$ each independently represent a divalent hydrocarbon group; and "a" and "b" are integers that satisfy $a \geq 0$ and $b \geq 0$);
$Y^1$ and $Y^2$ each independently represent "X", a hydrogen atom, or a monovalent hydrocarbon group; and "x", "y", and "z" are integers that satisfy $x \geq 0$, $y \geq 0$, $z \geq 0$, and
$x+y+z \geq 1$; however, when y=0, at least one of $Y^1$ and $Y^2$ is "X" and both x and z are an integer from 1 to 100,000.

9. The laminate of any of claims 1 to 8, wherein the cured silicone layer (L3) further comprises an isocyanate group-containing compound (f).

10. The laminate of claim 9, wherein the isocyanate group-containing compound (f) is a hexamethylene diisocyanate isocyanurate.

11. A releasable or adhesive film or sheet comprising the laminate according to any of claims 1 to 10 or a releasable or adhesive roll or roller comprising the laminate according to any of claims 1 to 10.

12. A method of preventing or reducing electrification of a laminate, the laminate comprising a substrate (L1) and a cured silicone layer (L3),
wherein
a primer layer (L2) is provided between the substrate (L1) and the cured silicone layer (L3), the primer layer (L2) being obtained by curing a condensation reaction curable silicone based primer composition, and the cured silicone layer (L3) includes a lithium salt (a) and a polyether modified polysiloxane (b).

13. Use of a laminate in accordance with any one of claims 1 to 10 in a releasable or adhesive film or sheet comprising the laminate according to any of claims 1 to 10 or as a releasable or adhesive roll or roller comprising the laminate according to any of claims 1 to 10.

14. The laminate of any of claims 1 to 10, wherein the content of lithium salt is in the range of 0.01 to 50 parts by weight (mass) of the solid content of the curable silicone primer composition.

## Patentansprüche

1. Ein Laminat, beinhaltend: ein Substrat (L1),
eine auf dem Substrat (L1) gebildete Primerschicht (L2), wobei die Primerschicht (L2) durch Härten einer in einer Kondensationsreaktion härtbaren Primerzusammensetzung auf Siliconbasis erhalten wird, und
eine gehärtete Siliconschicht (L3), umfassend ein Lithiumsalz (a) und ein Polyether-modifiziertes Polysiloxan (b), die auf der Primerschicht (L2) gebildet ist.

**2.** Laminat gemäß Anspruch 1, wobei das Substrat (L1) aus Harz hergestellt ist.

**3.** Laminat gemäß einem der Ansprüche 1 bis 2, wobei die in einer Kondensationsreaktion härtbare Primerzusammensetzung Folgendes beinhaltet:
ein oder zwei oder mehr Silanverbindungen (A) mit einer reaktiven funktionellen Gruppe und eine oder zwei oder mehr Verbindungen (B), die aus der Gruppe, bestehend aus einer organischen Aluminiumverbindung, einer organischen Titanatesterverbindung und einer Verbindung auf Platinbasis, ausgewählt sind.

**4.** Laminat gemäß Anspruch 3, wobei die Silanverbindung (A) mit einer reaktiven funktionellen Gruppe durch die allgemeine Formel (1) unten dargestellt ist:

$$R^1{}_nSi(OR^2)_{4-n} \qquad (1)$$

wobei $R^1$ unabhängig eine reaktive funktionelle Gruppe darstellt; $R^2$ unabhängig eine einwertige Kohlenwasserstoffgruppe darstellt; und "n" eine ganze Zahl von 1 bis 3 ist.

**5.** Laminat gemäß einem der Ansprüche 1 bis 4, wobei die gehärtete Siliconschicht (L3) ein gehärtetes Produkt einer in einer Additionsreaktion härtbaren Siliconzusammensetzung ist.

**6.** Laminat gemäß einem der Ansprüche 1 bis 5, wobei das Lithiumsalz (a) eines oder zwei oder mehr, ausgewählt aus der Gruppe, bestehend aus $LiBF_4$, $LiClO_4$, $LiPF_6$, $LiAsF_6$, $LiSbF_6$, $LiSO_3CF_3$, $LiN(SO_2CF_3)_2$, $LiSO_3C_4F_9$, $LiC(SO_2CF_3)_3$ und $LiB(C_6H_5)_4$, ist.

**7.** Laminat gemäß einem der Ansprüche 1 bis 6, wobei das Polyether-modifizierte Polysiloxan (b) ein Polyether-modifiziertes Polysiloxan mit einer Hydroxylgruppe ist.

**8.** Laminat gemäß einem der Ansprüche 1 bis 7, wobei das Polyether-modifizierte Polysiloxan (b) ein Polyether-modifiziertes Polysiloxan mit einer terminalen Hydroxylgruppe ist, dargestellt durch die allgemeine Formel (2) unten:

$$Y^1O\text{-}(R^3R^4SiO)_x\text{-}(R^5XSiO)_y\text{-}(R^6R^7SiO)_z\text{-}Y^2 \qquad (2)$$

wobei $R^3$, $R^4$, $R^5$, $R^6$ und $R^7$ jeweils unabhängig ein Wasserstoffatom, eine Hydroxylgruppe oder eine einwertige Kohlenwasserstoffgruppe darstellen; "X" $-R^8-(OR^9)_a-(OR^{10})_b-OH$ darstellt (wobei $R^8$, $R^9$ und $R^{10}$ jeweils unabhängig eine zweiwertige Kohlenwasserstoffgruppe darstellen; und "a" und "b" ganze Zahlen sind, die $a \geq 0$ und $b \geq 0$ erfüllen); $Y^1$ und $Y^2$ jeweils unabhängig "X", ein Wasserstoffatom oder eine einwertige Kohlenwasserstoffgruppe darstellen; und "x", "y" und "z" ganze Zahlen sind, die $x \geq 0$, $y \geq 0$, $z \geq 0$ und $x + y + z \geq 1$ erfüllen; wenn jedoch $y = 0$, ist mindestens eines von $Y^1$ und $Y^2$ "X" und sowohl x als auch z sind eine ganze Zahl von 1 bis 100 000.

**9.** Laminat gemäß einem der Ansprüche 1 bis 8, wobei die gehärtete Siliconschicht (L3) ferner eine Isocyanatgruppe enthaltende Verbindung (f) beinhaltet.

**10.** Laminat gemäß Anspruch 9, wobei die Isocyanatgruppe enthaltende Verbindung (f) ein Hexamethylendiisocyanatisocyanurat ist.

**11.** Eine Abzieh- oder Klebefolie oder ein Abzieh- oder Klebebogen, beinhaltend das Laminat gemäß einem der Ansprüche 1 bis 10, oder eine Abzieh- oder Kleberolle oder eine Abzieh- oder Klebewalze, beinhaltend das Laminat gemäß einem der Ansprüche 1 bis 10.

**12.** Ein Verfahren zur Verhinderung oder Reduzierung von Elektrifizierung eines Laminats, wobei das Laminat ein Substrat (L1) und eine gehärtete Siliconschicht (L3) beinhaltet, wobei
eine Primerschicht (L2) zwischen dem Substrat (L1) und der gehärteten Siliconschicht (L3) bereitgestellt wird, wobei die Primerschicht (L2) durch Härten einer in einer Kondensationsreaktion härtbaren Primerzusammensetzung auf Siliconbasis erhalten wird und die gehärtete Siliconschicht (L3) ein Lithiumsalz (a) und ein Polyether-modifiziertes Polysiloxan (b) umfasst.

**13.** Verwendung eines Laminats gemäß einem der Ansprüche 1 bis 10 in einer Abzieh- oder Klebefolie oder einem Abzieh- oder Klebebogen, beinhaltend das Laminat gemäß einem der Ansprüche 1 bis 10, oder als Abzieh- oder Kleberolle oder Abzieh- oder Klebewalze, beinhaltend das Laminat gemäß einem der Ansprüche 1 bis 10.

**14.** Laminat gemäß einem der Ansprüche 1 bis 10, wobei der Gehalt an Lithiumsalz im Bereich von 0,01 bis 50 Gewichtsteilen (Masseteilen) des Feststoffgehalts der härtbaren Siliconprimerzusammensetzung liegt.

## Revendications

**1.** Un stratifié comprenant : un substrat (L1),
une couche d'apprêt (L2) formée sur le substrat (L1), la couche d'apprêt (L2) étant obtenue par durcissement d'une composition d'apprêt à base de silicone durcissable par une réaction de condensation, et
une couche de silicone durcie (L3) incluant un sel de lithium (a) et un polysiloxane modifié par un polyéther (b), laquelle est formée sur la couche d'apprêt (L2).

**2.** Le stratifié de la revendication 1, dans lequel le substrat (L1) est réalisé à partir d'une résine.

**3.** Le stratifié de n'importe lesquelles des revendications 1 à 2, dans lequel la composition d'apprêt durcissable par une réaction de condensation comprend :
un ou deux composés silane (A) ou plus ayant un groupe fonctionnel réactif, et un ou deux composés (B) ou plus sélectionnés dans le groupe constitué d'un composé organique d'aluminium, d'un composé ester de titanate organique, et d'un composé à base de platine.

**4.** Le stratifié de la revendication 3, dans lequel le composé silane (A) ayant un groupe fonctionnel réactif est représenté par la formule générale (1) ci-dessous :

$$R^1_nSi(OR^2)_{4-n} \qquad (1)$$

dans laquelle $R^1$ représente indépendamment un groupe fonctionnel réactif ; $R^2$ représente indépendamment un groupe hydrocarbure monovalent ; et « n » est un nombre entier allant de 1 à 3.

**5.** Le stratifié de n'importe lesquelles des revendications 1 à 4, dans lequel la couche de silicone durcie (L3) est un produit durci d'une composition de silicone durcissable par une réaction d'addition.

**6.** Le stratifié de n'importe lesquelles des revendications 1 à 5, dans lequel le sel de lithium (a) est un ou deux éléments ou plus sélectionnés dans le groupe constitué de $LiBF_4$, $LiClO_4$, $LiPF_6$, $LiAsF_6$, $LiSbF_6$, $LiSO_3CF_3$, $LiN(SO_2CF_3)_2$, $LiSO_3C_4F_9$, $LiC(SO_2CF_3)_3$, et $LiB(C_6H_5)_4$.

**7.** Le stratifié de n'importe lesquelles des revendications 1 à 6, dans lequel le polysiloxane modifié par un polyéther (b) est un polysiloxane modifié par un polyéther ayant un groupe hydroxyle.

**8.** Le stratifié de n'importe lesquelles des revendications 1 à 7, dans lequel le polysiloxane modifié par un polyéther (b) est un polysiloxane modifié par un polyéther ayant un groupe hydroxyle terminal représenté par la formule générale (2) ci-dessous :

$$Y^1O-(R^3R^4SiO)_x-(R^5XSiO)_y-(R^6R^7SiO)_z-Y^2 \qquad (2)$$

dans laquelle $R^3$, $R^4$, $R^5$, $R^6$, et $R^7$ représentent chacun indépendamment un atome d'hydrogène, un groupe hydroxyle, ou un groupe hydrocarbure monovalent ; « X » représente $-R^8-(OR^9)_a-(OR^{10})_b-OH$ (dans lequel $R^8$, $R^9$, et $R^{10}$ représentent chacun indépendamment un groupe hydrocarbure divalent ; et « a » et « b » sont des nombres entiers qui satisfont à $a \geq 0$ et $b \geq 0$) ;
$Y^1$ et $Y^2$ représentent chacun indépendamment « X », un atome d'hydrogène, ou un groupe hydrocarbure monovalent ; et « x », « y », et « z » sont des nombres entiers qui satisfont à $x \geq 0$, $y \geq 0$, $z \geq 0$, et
$x + y + z \geq 1$ ; toutefois, lorsque y = 0, au moins un élément parmi $Y^1$ et $Y^2$ est « X » et x et z sont tous les deux un nombre entier allant de 1 à 100 000.

**9.** Le stratifié de n'importe lesquelles des revendications 1 à 8, dans lequel la couche de silicone durcie (L3) comprend en outre un composé contenant un groupe isocyanate (f).

**10.** Le stratifié de la revendication 9, dans lequel le composé contenant un groupe isocyanate (f) est un diisocyanate isocyanurate d'hexaméthylène.

11. Une feuille ou un film détachable ou adhésif comprenant le stratifié selon n'importe lesquelles des revendications 1 à 10 ou une pellicule ou un rouleau détachable ou adhésif comprenant le stratifié selon n'importe lesquelles des revendications 1 à 10.

12. Une méthode pour empêcher ou réduire l'électrification d'un stratifié, le stratifié comprenant un substrat (L1) et une couche de silicone durcie (L3), dans laquelle une couche d'apprêt (L2) est fournie entre le substrat (L1) et la couche de silicone durcie (L3), la couche d'apprêt (L2) étant obtenue par durcissement d'une composition d'apprêt à base de silicone durcissable par une réaction de condensation, et la couche de silicone durcie (L3) inclut un sel de lithium (a) et un polysiloxane modifié par un polyéther (b).

13. Utilisation d'un stratifié conformément à n'importe laquelle des revendications 1 à 10 dans une feuille ou un film détachable ou adhésif comprenant le stratifié selon n'importe lesquelles des revendications 1 à 10 ou en tant que pellicule ou rouleau détachable ou adhésif comprenant le stratifié selon n'importe lesquelles des revendications 1 à 10.

14. Le stratifié de n'importe lesquelles des revendications 1 à 10, dans lequel la teneur de sel de lithium est comprise dans la gamme de 0,01 à 50 parties en poids (masse) de la teneur en matières solides de la composition d'apprêt de silicone durcissable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H07003215 B
- JP H09208923 B
- JP 2009030028 A
- JP 7003215 A
- JP 9208923 A
- EP 2248865 A